# EUROPÄISCHE PATENTSCHRIFT

(11) **EP 1 613 694 B1**
(45) Veröffentlichungstag und Bekanntmachung des Hinweises auf die Patenterteilung: **30.06.2010**
(21) Anmeldenummer: 04724577.4
(22) Anmeldetag: 31.03.2004
(51) Int. Cl.: C08L 23/26, C08F 8/30, C10L 1/22, C10M 149/12, C10M 133/54, C10M 141/06, C10L 10/06, C09D 11/02

(54) **POLYALKENAMINE MIT VERBESSERTEN ANWENDUNGSEIGENSCHAFTEN**
POLYALKENE AMINES WITH IMPROVED APPLICATIONAL PROPERTIES
POLYALCENAMINE PRESENTANT DES PROPRIETES D'APPLICATION AMELIOREES

(30) Priorität: 01.04.2003 DE 10314809
(43) Veröffentlichungstag der Anmeldung: 11.01.2006
(73) Patentinhaber: BASF SE, 67056 Ludwigshafen (DE)
(72) Erfinder: BERGEMANN, Marco/BASF Japan Inc., Tokyo 102-8570 (JP); SCHWAHN, Harald, 69168 Wiesloch (DE); POSSELT, Dietmar, 69120 Heidelberg (DE); FEHR, Erich, K., 34246 Vellmar (DE); WETTLING, Thomas, 67117 Limburgerhof (DE); DIEHL, Klaus, 67454 Hassloch (DE); SCHMIDTKE, Helmut, 64625 Bensheim (DE)
(86) Internationale Anmeldenummer: PCT/EP2004/003425
(87) Internationale Veröffentlichungsnummer: WO 2004/087808

(56) Entgegenhaltungen:
- EP-A- 0 244 616
- WO-A-00/47698
- WO-A-01/85874
- WO-A-97/23586

## Beschreibung

Die vorliegende Erfindung betrifft Polyalkenamin-Formulierungen, umfassend wenigstens ein Polyalkenamin in einem Lösungsmittel, mit verbesserten Anwendungseigenschaften, insbesondere verbesserten Tieftemperatureigenschaften; ein Verfahren zur Herstellung solcher Formulierungen sowie die Verwendung dieser Formulierungen in Kraft- und Schmierstoffzusammensetzungen, insbesondere Kraftstoffen, zur Verbesserung der Einlasssystem-reinigenden Wirkung solcher Kraftstoffe.

### Stand der Technik:

Vergaser und Einlasssysteme von Ottomotoren, aber auch Einspritzsysteme für die Kraftstoffdosierung, werden durch Verunreinigungen stark belastet, die durch Staubteilchen aus der Luft, unverbrannte Kohlenwasserstoffreste aus dem Brennraum und die in den Vergaser geleiteten Kurbelwellengehäuseentlüftungsgase verursacht werden.Diese Rückstände verschieben das Luft-Kraftstoff-Verhältnis im Leerlauf und im unteren Teillastbereich, so dass das Gemisch magerer, die Verbrennung unvollständiger wird und damit die Anteile unverbrannter oder teilverbrannter Kohlenwasserstoffe im Abgas größer werden. Steigender Benzinverbrauch ist die Folge.

Es ist bekannt, dass zur Vermeidung dieser Nachteile Kraftstoffadditive zur Reinhaltung von Ventilen und Vergasern bzw. Einspritzsystemen von Ottomotoren verwendet werden (vgl. z. B.: M. Rossenbeck in Katalysatoren, Tenside, Mineralöladditive, Hrsg. J. Falbe, U. Hasserodt, S. 223, G. Thieme Verlag, Stuttgart 1978). Derartige grenzflächenaktive Kraftstoffadditive werden im Allgemeinen als "Detergenzien" bezeichnet. Im Bereich der Schmierstoffzusammensetzungen werden oftmals sogenannte "Dispergatoren" als grenzflächenaktive Additive eingesetzt, wobei diese teilweise auch für den Einsatz als Detergenzien in Kraftstoffzusammensetzungen geeignet sind.

Polyalkenamine gehören zu den am weitesten verbreiteten Kraftstoffadditiven. Sie zählen zur Gruppe der Detergensadditive und zeichnen sich durch eine hervorragende reinhaltende bzw. reinigende Wirkung im Motor, insbesondere in den Kraftstoffeinlasssystemen des Motors aus.

Polybutyl- und Polylsobutylamine, Verfahren zu deren Herstellung und deren Verwendung in Kraft- und Schmierstoffzusammensetzungen sind beispielsweise aus der EP-A 0 244 616 und der EP-A 0 277 345 bekannt.

Polyalkenamine, wie die oben erwähnten Polybuten- oder Polyisobutenamine, werden gewöhnlich nicht in Substanz sondern in Gegenwart eines reaktionsinerten Lösungsmittels produziert. Dieses wird nach Beendigung der Reaktion aus dem Reaktionsgemisch nicht entfernt. Da es die Verbrennungsprozesse im Motor nicht stört, verbleibt es im eigentlichen Kraftstoff-Additiv.

Herkömmliche lösungsmittelhaltige Polyalkenamin-Produkte weisen jedoch Probleme hinsichtlich ihres Tieftemperatur-Verhaltens auf. So zeigen sie eine Neigung zur Ausbildung von Sedimentationen aufgrund der Auskristallisation von Paraffinkomponenten aus dem Lösungsmittel.

Aus der WO 00/47698 ist eine Polyisobutenamin-Formulierung bekannt, wobei Polyisobutenamin, hergestellt durch Hydroformylierung und anschließende reduktive Aminierung mit Ammoniak von hochreaktivem Polyisobuten mit Mn = 1000 g/mol, und Verdünnung zu gleichen Gewichtsteilen mit C₁₀-C₁₄-Paraffin verwendet wird.

Aus der WO 01/85874 ist eine Formulierung von Polyisobutenamin mit Mn = 1000 g/mol, gelöst in n-Paraffingemisch mit einer Viskosität < 20 cm²/sec bei 20 °C bekannt, welche zusätzlich mit einem mineralischen Grundöl und einem synthetischen Butylenoxid-Carrier vermischt wird.

Aus der WO 97/23586 ist die Herstellung eines Polyisobutenamins bekannt, wobei 300 g Polyisobuten (Mn = 1000 g/mol), 300 g Mihagol M, 402 g einer wässrigen, 25 %-igen Ammoniaklösung sowie 0,13 g eines speziellen Rhodiumkatalysators in einem Schüttelautoklaven umgesetzt werden.

Der vorliegenden Erfindung liegt somit die Aufgabe zugrunde, neuartige Polyalkenamin-Formulierungen mit verbesserten Tieftemperatureigenschaften zur Verfügung zu stellen.

### Kurze Beschreibung der Erfindung:

Es wurde nun überraschenderweise gefunden, dass durch geeignete Auswahl von Lösungsmitteln eine Polyalkenamin-Formulierung bereitgestellt werden kann, welche deutlich verbesserte Anwendungseigenschaften, insbesondere Tieftemperatureigenschaften aufweist.

Diese verbesserten Tieftemperatureigenschaften finden ihren Ausdruck in einem niedrigeren Cloud Point (CP), einem niedrigeren Pour Point (PP) und/oder einer verbesserten Tieftemperatur-Lagerstabilität.

Trotz einer Veränderung des Lösungsmittelsystems wurde überraschenderweise festgestellt, dass hinsichtlich der großtechnischen Herstellung keinerlei Veränderungen der vorhandenen Produktionsanlagen oder der eingesetzten Katalysatoren erforderlich sind. Bei gleichem Volumenstrom erlaubt die vorliegende Erfindung die Herstellung einer deutlich höheren Menge des als Additiv eigentlich wirksamen Polyalkenamins. Bei gleicher eingesetzter Additivmenge (Polyalken gelöst in Lösungsmittel) wurden in Motorversuchen deutlich bessere Wirksamkeiten im Vergleich zu Additiven gemäß Stand der Technik erzielbar.

Ein erster Gegenstand der Erfindung betrifft eine Polyalkenamin-Formulierung, umfassend wenigstens ein Polyalkenamin in einem Lösungsmittel, wobei die Formulierung wenigstens eine der folgenden Tieftemperatureigenschaften aufweist:
a) Cloud Point (bestimmt nach DIN ISO 3015 bzw. DIN EN 23015) kleiner oder gleich -28°C;
b) Pour Point (bestimmt nach DIN ISO 3016) kleiner oder gleich -27°C; und/oder
c) keine kristallinen Ausfällungen nach Lagerung bei einer Temperatur von etwa -35°C, bestimmt nach einer Lagerung von 1 Tag bis 6 Wochen, wie z.B. 5, 10, 20 oder 30 Tagen;
wobei das Lösungsmittel wie in Anspruch 1 definiert ist.

Vorzugsweise weist die Formulierung einen Pour Point im Bereich von -27 bis -55°C, wie z.B. -30 bis -50°C und/oder einen Cloud Point im Bereich von etwa -28 bis -51°C, wie z.B. -33 bis -45°C auf.

Vorzugsweise besitzt das Lösungsmittel eine Dichte (15°C, ASTM D 4052, EN ISO 12185-1996) im Bereich von 650 bis 900, wie z.B. 720 bis 820 oder 740 bis 810 kg/m³. und /oder eine Viskosität (20°C, ASTM D 445) im Bereich von 1,0 bis 5,0, wie z.B. 1,6 bis 2,0 oder 1,7 bis 1,9 mm²/s, aufweist.

Das Lösungsmittel ist ausgewählt unter Gemischen von
L1) wenigstens einem n- oder iso-C₁₀-C₁₄-Paraffin, und
L2) wenigstens einem C₁₀-C₁₄-Naphthen,
wobei L1 und L2 in einem Mischungsverhältnis von 10:90 bis 90:10 enthalten sind.

Der Polyalkenteil des in der Formulierung enthaltenen Polyalkenamins ist das Polymerisationsprodukt von gleichen oder verschiedenen, geradkettigen oder verzweigten C₂-C₆-Olefin-Monomeren, welche in dem Polymer vorzugsweise statistisch einpolymerisiert sind.

Das zur Herstellung des Polyalkenamins verwendete Polyalken weist ein zahlenmittleres Molekulargewicht Mn von 200 bis 10.000, wie z.B. 500 bis 5000 oder 800 bis 1200, oder 850 bis 1100, wie z.B. etwa 1000, auf.

In einer besonders bevorzugten Ausführungsforem ist das Polyalken von i-Buten oder einem i-Buten-haltigen Monomerengemisch, wie z.B. einem Gemisch i-Buten und bis zu etwa 20 Gew.-% n-Buten, abgeleitet. Vorzugsweise ist das Polyalken ein Polyisobuten (PIB).

In einer weiteren besonderen Ausführungsform der erfindungsgemäßen Formulierung ist das Polyalkenamin ein Polyisobutenamin (PIBA), das von einem Polyisobuten mit wenigstens einer der folgenden Eigenschaften abgeleitet ist:
a) Anteil an Vinyliden-Doppelbindungen von mindestens 70 Mol.-%, bezogen auf Polyisobuten;
b) Polyisobutenpolymergerüst aus mindestens 85 Gew.-% Isobuteneinheiten;
c) Polydispersität im Bereich von 1,05 bis 7.

Insbesondere ist das Polyalkenamin das Reaktionsprodukt eines Polyalkens mit einem Amin der folgenden allgemeinen Formel I

HNR¹R² (I)

worin
R¹ und R² unabhängig voneinander für H, einen C₁-C₁₈-Alkyl-,C₂-C₁₈-Alkenyl-, C₄-C₁₈-Cycloalkyl-, C₁-C₁₈-Alkyl-aryl-, Hydroxy-C₁-C₁₈-alkyl-, Poly(oxyalkyl)-, Polyalkylenpolyamin- oder einen Polyalkyleniminrest stehen; oder zusammen mit dem Stickstoffatom an das sie gebunden sind, für einen heterocyclischen Ring stehen.

Das erfindungsgemäß eingesetzte PIBA ist vorzugsweise das Reaktionsprodukt der Hydroformylierung von reaktivem PIB, d.h. welches wenigstens obiges Merkmal a) erfüllt, und der anschließenden reduktiven Aminierung des Oxoprodukts.

Ein wesentlicher Vorteil der Erfindung ist auch darin zu sehen, dass die Formulierung als Lösungsmittel das Prozesslösungsmittel der Hydroformylierung und anschließenden reduktiven Aminierung von reaktivem PIB noch enthalten kann, ohne die Funktionalität des Additivs negativ zu beeinflussen.

Eine weitere, besonders bevorzugte Ausführungsform der Erfindung betrifft eine PIBA-Formulierung, enthaltend PIBA in einem Gemisch, umfassend ein Lösungsmittel gemäß obiger Definition, wobei PIBA in einem Anteil von wenigstens 63 Gew.-%, insbesondere wenigstens 65 Gew.-%, wie z.B. 65 bis 99 oder 65 bis 85 oder 65 bis 75 Gew.-%, bezogen auf das Gesamtgewicht des Gemisches, enthalten ist.

Ein weiterer Gegenstand der Erfindung betrifft Kraft- oder Schmierstoffzusammensetzungen, umfassend in einer Hauptmenge eines Kraft- oder Schmierstoffs einen wirksamen Anteil einer Formulierung nach einem der vorhergehenden Ansprüche. So kann beispielsweise die erfindungsgemäße Formulierung einem Kraftstoff in einem Anteil von 10 bis 10000, wie z.B. 20 bis 5000 ppm zugesetzt werden. Schmierstoffen können die Formulierungen in Anteilen von 1 bis 15 Gew.-%, wie z.B. 2 bis 10 Gew.-% zugesetzt werden.

Ein weiterer Gegenstand der Erfindung betrifft die Verwendung einer Formulierung gemäß obiger Definition als Additiv für Kraft- oder Schmierstoffzusammensetzungen, oder als Additiv für Drucktinten; insbesondere die Verwendung als Additiv zur Verbesserung der Einlasssystem-reinigenden Wirkung eines Ottokraftstoffs.

Gegenstand der Erfindung sind auch Additivpakete, umfassend eine Formulierung gemäß obiger Definition gegebenenfalls in Kombination mit wenigstens einem weiteren Co-Additiv.

Gegenstand der Erfindung ist auch die Verwendung eines Lösungsmittel gemisches von L1 und L2 gemäß obiger Definition zur Verbesserung des Tieftemperaturverhaltens eines Polyalkenamins, insbesondere von PIBA, gemäß obiger Definition.

Ein letzter Gegenstand der Erfindung betrifft ein Verfahren zur Herstellung einer erfindungsgemäßen Polyalkenamin-Formulierung, wobei man
a. ein Polyalken gemäß obiger Definition in einem Lösungsmittel gemäß obiger Definition löst;
b. die Lösung in an sich bekannter Weise in Gegenwart von CO und H₂ hydroformyliert; und
c. das dabei erhaltene Oxoprodukt in Gegenwart eines Amins gemäß obiger Formel I hydrierend aminiert.

Vorzugsweise stellt man in Stufe a) eine Polyalken-Lösung her, deren Lösungsmittelanteil höchstens 40 Gew.-%, wie z.B. < 39 oder < 35 Gew.-%, bezogen auf das Gesamtgewicht der Lösung beträgt.

### Detaillierte Beschreibung der Erfindung:

### A) Das Polyalkenamin

Erfindungsgemäß werden insbesondere solche Polyalkenamine verwendet, deren Polyalkenteil das Polymerisationsprodukt von gleichen oder verschiedenen, geradkettigen oder verzweigten C₂-C₆-Olefin-Monomeren ist. Beispiele für geeignete Monomere sind dabei Ethylen, Propylen, 1-Buten, i-Buten, 1-Penten, 2-Methylbuten, 1-Hexen, 2-Methylpenten, 3-Methylpenten, 4-Methylpenten. Das Polyalken weist dabei ein zahlenmittleres Molekulargewicht Mn von 200 bis 10.000 auf.

Besonders bevorzugte Polyalkenamine sind aber abgeleitet von Polyisobutenen. Besonders geeignete Polyisobutene sind sogenannte "hochreaktive" Polyisobutene, die sich durch einen hohen Gehalt an terminal angeordneten Doppelbindungen auszeichnen. Terminal angeordnete Doppelbindungen sind dabei alpha-olefinische Doppelbindungen des Typs 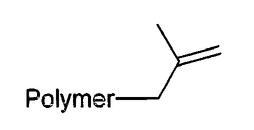 welche zusammen auch als Vinyliden-Doppelbindungen bezeichnet werden. Geeignete hochreaktive Polyisobutene sind beispielsweise Polyisobutene, die einen Anteil an Vinyliden-Doppelbindungen von größer 70 Mol-%, insbesondere größer 80 Mol-% oder größer 85 Mol-% aufweisen. Bevorzugt sind insbesondere Polyisobutene, die einheitliche Polymergerüste aufweisen. Einheitliche Polymergerüste weisen insbesondere solche Polyisobutene auf, die zu wenigstens 85 Gew.-%, vorzugsweise zu wenigstens 90 Gew.-% und besonders bevorzugt zu wenigstens 95 Gew.-% aus Isobuteneinheiten aufgebaut sind. Vorzugsweise weisen solche hochreaktiven Polyisobutene ein zahlenmittleres Molekulargewicht in dem oben genannten Bereich auf. Darüber hinaus können die hochreaktiven Polyisobutene eine Polydispersität im Bereich von 1,05 bis 7, insbesondere von etwa 1,1 bis 2,5, wie z.B. von kleiner 1,9 oder kleiner 1,5, aufweisen.

Unter Polydispersität versteht man den Quotienten aus gewichtsmittlerem Molekulargewicht Mw geteilt durch das zahlenmittlere Molekulargewicht Mn.

Besonders geeignete hochreaktive Polyisobutene sind z.B. die Glissopal-Marken der BASF AG, insbesondere Glissopal 1000 (Mn = 1000), Glissopal V 33 (Mn = 550) und Glissopal 2300 (Mn = 2300) und deren Mischungen. Andere zahlenmittlere Molekulargewichte können nach im Prinzip bekannter Weise durch Mischen von Polyisobutenen unterschiedlicher zahlenmittlerer Molekulargewichte oder durch extraktive Anreicherung von Polyisobutenen bestimmter Molekulargewichtsbereiche eingestellt werden.

Die Polyalkenkomponente wird zur Herstellung des Polyalkenamins in an sich bekannter Weise aminiert.

Ein bevorzugtes Verfahren erfolgt dabei über die Herstellung eines Oxo-Zwischenprodukts durch Hydroformylierung und anschließende reduktive Aminierung in Gegenwart einer geeigneten Stickstoffverbindung.

Geeignete Amine sind insbesondere Verbindungen der Formel I, d.h. HNR¹R².
R¹ und R² können darin unabhängig voneinander stehen für:
(1) H;
(2) einen C₁-C₁₈-Alkylrest; als Beispiele für geeignete Alkylreste sind zu nennen geradkettige oder verzweigte Reste mit 1 bis 18 C-Atomen, wie Methyl, Ethyl, i- oder n-Propyl, n-, i-, sec.- oder tert.-Butyl, n- oder i-Pentyl; außerdem n-Hexyl, n-Heptyl, n-Octyl, n-Nonyl, n-Decyl, n-Undecyl, n-Tridecyl, n-Tetradecyl, n-Pentadecyl und n-Hexadecyl und n-Octadecyl sowie die ein- oder mehrfach verzweigten Analoga davon; sowie entsprechende Reste, in denen die Kohlenstoffkette eine oder mehrere Etherbrücken aufweist;
(3) einen C₂-C₁₈-Alkenylrest; als Beispiele für geeignete Alkenylreste sind die ein- oder mehrfach, vorzugsweise einfach oder zweifach ungesättigten Analoga oben genannter Alkylreste mit 2 bis 18 Kohlenstoffatomen zu nennen, wobei die Doppelbindung in beliebiger Position der Kohlenstoffkette liegen kann;
(4) einen C₄-C₁₈-Cycloalkylrest; als Beispiele sind zu nennen Cyclobutyl, Cyclopentyl und Cyclohexyl, sowie die mit 1 bis 3 C₁-C₄-Alkylresten substituierten Analoga davon; wobei die C₁-C₄-Alkylreste z.B. ausgewählt sind unter Methyl, Ethyl, i- oder n-Propyl, n-, i-, sec.- oder tert.-Butyl;
(5) einen C₁-C₁₈-Alkyl-aryl-Rest; wobei die C₁-C₁₈-Alkyl-Gruppe wie oben definiert ist und die Aryl-Gruppe abgeleitet ist von ein- oder zweikernigen kondensierten oder nichtkondensierten 4-bis 7-gliedrigen, insbesondere 6-gliedrigen aromatischen oder heteroaromatischen Gruppen, wie Phenyl, Pyridyl, Naphtyl und Biphenylyl.
(6) einen C₂-C₁₈-Alkenyl-aryl-Rest; wobei die C2-C18-Alkenyl-Gruppe wie oben definiert ist und die Aryl-Gruppe wie oben definiert ist;
(7) einen Hydroxy-C₁-C₁₈-alkyl-Rest; wobei dieser den ein- oder mehrfach, vorzugsweise einfach, insbesondere einfach terminal, hydroxylierten Analoga obiger C₁-C₁₈-Alkyl-Reste entspricht; wie z.B. 2-Hydroxyethyl und 3-Hydroxypropyl;
(8) einen gegebenenfalls hydroxylierten Poly(oxyalkyl)-Rest, welcher erhältlich ist durch Alkoxylierung des N-Atoms mit 2 bis 10 C₁-C₄-Alkoxgruppen, wobei einzelne Kohlenstoffatome gegebenenfalls weitere Hydroxylgruppen tragen können. Bevorzugte Alkoxygruppen umfassen Methoxy-, Ethoxy- und n-Propoxygruppen;
(9) einen Polyalkylenpolyaminrest der Formel

   Z-NH-(C₁-C₆-alkylen-NH)ₘ-C₁-C₆-alkylen,

   worin
   m einen ganzzahligen Wert von 0 bis 5 bedeutet, Z für H oder C₁-C₆-Alkyl steht und C₁-C₆-Alkyl für Reste wie Methyl, Ethyl, i- oder n-Propyl, n-, i-, sec.- oder tert.-Butyl, n- oder i-Pentyl; außerdem n-Hexyl steht; und C₁-C₆-Alkylen für die entsprechenden verbrückten Analoga dieser Reste steht;
(10) einen Polyalkyleniminrest, aufgebaut aus 1 bis 10 C₁-C₄-Alkylenimingruppen, insbesondere Ethylenimingruppen;
(11) oder zusammen mit dem Stickstoffatom an das sie gebunden sind für einen gegebenenfalls substituierten 5 bis 7-gliedrigen, gegebenenfalls mit ein bis drei C₁-C₄-Alkylresten substituierten heterocyclischen Ring, der gegebenenfalls ein weiteres Ringheteroatom, wie O oder N trägt.

Beispiele für geeignete Verbindungen der Formel HNR¹R² sind:
- Ammoniak
- primäre Amine, wie Methylamin, Ethylamin, n-Propylamin, Isopropylamin, n-Butylamin, iso-Butyl-amin, sek.-Butylamin, tert.-Butylamin, Pentylamin, Hexylamin, Cyclopentylamin und Cyclohexylamin; sowie primäre Amine der Formel CH₃-O-C₂H₄-NH₂, C₂H₅-O- C₂H₄-NH₂, CH₃-O-C₃H₆- NH₂, C₂H₅-O- C₃H₆- NH₂, n- C₄H₉-O- C₄H₈- NH₂, HO-C₂H₄- NH₂, HO- C₃H₆- NH₂ und HO- C₄H₈- NH₂;
- sekundäre Amine, wie z.B. Dimethylamin, Diethylamin, Methyl-ethylamin, Di-n-propylamin, Diisopropylamin, Diisobutylamin, Di-sek.-butylamin, Di-tert.-butylamin, Dipentylamin, Dihexylamin, Dicyclopentylamin, Dicyclohexylamin und Diphenylamin; sowie sekundäre Amine der Formel (CH₃-O- C₂H₄)₂NH, (C₂H₅-O- C₂H₄)₂NH, (CH₃-O-C₃H₆)₂NH, (C₂H₅-O- C₃He)₂NH, (n- C₄H₉-O- C₄H₈)₂NH, (HO- C₂H₄)₂NH, (HO- C₃H₆)₂NH und (HO-C₄H₈)₂NH;
- heterozyklische Amine, wie Pyrrolidin, Piperidin, Morpholin und Piperazin sowie deren substituierte Derivate, wie N-C₁-C₆-Alkylpiperazine und Dimethylmorpholin.
- Polyamine, wie z.B. C₁-C₄-Alkylendiamine, Di- C₁-C₄-alkylentriamine, Tri- C₁-C₄-alkylentetramine und höhere Analoga;
- Polyethylenimine, bevorzugt Oligoethylenimine, bestehend aus 1 bis 10, bevorzugt 2 bis 6 Ethylenimineinheiten. Besondere Beispiele für geeignete Polyamine und Polyimine sind n-Propylendiamin, 1,4-Butandiamin, 1,6-Hexandiamin, Diethylentriamin, Triethylentetramin und Polyethylenimine, sowie deren Alkylierungsprodukte, wie z.B. 3-(Dimethylamino)-n-propyl-amin, N,N-Dimethylethylendiamin, N,N-Diethylethylendiamin und N,N,N',N'-Tetramethyldiethylentriamin. Ebenfalls geeignet ist Ethylendiamin.

### B) Das Lösungsmittel

Das in den erfindungsgemäßen Formulierungen enthaltene Lösungsmittel ist insbesondere das bei der Polyalkenamin-Herstellung eingesetzte Prozesslösungsmittel, ausgewählt unter linearen, verzweigten, oder cyclischen, im wesentlichen gesättigten C₆-C₂₀-, vorzugsweise C₈-C₁₆-, insbesondere C₁₀-C₁₄-Kohlenwasserstoffen und Gemischen davon. Insbesondere fallen unter diese Definition n- und i-Paraffine dieser Kettenlänge sowie aus der Erdöl-Naphthen-Fraktion abgeleitete cyclische Verbindungen mit dieser Kohlenstoffzahl.

Gewöhnlich handelt es sich bei den eingesetzten paraffinischen oder naphthenischen Lösungen nicht um Reinsubstanzen sondern um Stoffgemische.

Das Lösungsmittel ist ausgewählt unter Gemischen von
L1) wenigstens einem n- oder iso-C₁₀-C₁₄-Paraffin, und
L2) wenigstens einem C₁₀-C₁₄-Naphthen,
wobei L1 und L2 in einem Mischungsverhältnis von 10:90 bis 90:10 enthalten sind.

Als nichtlimitierende Beispiele für geeignete paraffinische Lösungsmittel sind solche zu nennen die unter der Handelsbezeichnung MIHAGOL von BP Deutschland erhältlich sind. Insbesondere ist dabei MIHAGOL M zu nennen, mit einem n-Paraffinanteil von mindestens 99 Gew.-%, welches in überwiegenden Anteilen Paraffine mit einer Kettenlänge von 11, 12 und 13 C-Atomen umfasst und Nebenanteile von C₁₄ und C₉ Paraffinen oder kurzkettigeren Paraffinen enthält.

Als nichtlimitierende Beispiele für geeignete naphthenische Lösungsmittel sind solche zu nennen, die unter der Handelsbezeichnung LIAV von FORTUM OIL AND GAS erhältlich sind. Insbesondere ist dabei NESSOL LIAV 230 zu nennen welches in überwiegenden Anteilen gesättigte cyclische Aliphaten mit einer Kohlenstoffzahl von 10 bis 14 umfasst.

Die Lösungsmittelgemische werden in einer Menge eingesetzt, die ausreicht, der Formulierung das oben beschriebene vorteilhafte Tieftemperatur-Verhalten zu verleihen.

### C) Herstellung der Formulierung

Die Herstellung der Polyalkenamin-Formulierung entspricht vorzugsweise im Wesentlichen der Synthese des Polyalkenamins. Dieses soll anhand der Synthese eines Polyisobutenamins näher erläutert werden. Die Herstellung erfolgt analog zu dem in EP-A-0244 616 oder 0 277 345 beschriebenen Verfahren.

Dazu wird Polyisobuten in Gegenwart eines Rhodium- oder Cobalt-Katalysators, wie z.B. Rhodiumdicarbonylacetylacetonat, in Gegenwart von CO und Wasserstoff bei einer Temperatur im Bereich von 80 bis 200°C und einem CO/Wasserstoff-Druck von bis zu 600 bar hydroformyliert und anschließend eine hydrierende Aminierung des gebildeten Oxoprodukts (Alkohol und/oder Aldehyd) mit der gewünschten Stickstoffverbindung, wie z.B. Ammoniak, durchgeführt. Die Aminierung wird zweckmäßigerweise bei Temperaturen von 80 bis 200 °C und Drucken von bis zu 600 bar durchgeführt. Vor Beginn der Reaktion setzt man dem Polyisobuten ein Lösungsmittel des oben beschriebenen Typs in einer Menge zu, die ausreicht, um das gewünschte Tieftemperaturverhalten des Amin-Endprodukts in dem Lösungsmittel einzustellen.

### D) Weitere Additivkomponenten

Die erfindungsgemäßen Polyalkenamin-Formulierungen können den zu additivierenden Kraft- oder Schmierstoffen einzeln oder im Gemisch mit weiteren wirksamen Additivkomponenten (Co-Additive) zugesetzt werden.

Als Beispiele können von den obigen Polyalkenaminen verschiedene Additive mit Detergenswirkung und/oder mit Ventilsitzverschleiß-hemmender Wirkung (im folgenden bezeichnet als Detergensadditive) genannt werden. Dieses Detergensadditiv besitzt mindestens einen hydrophoben Kohlenwasserstoffrest mit einem zahlengemittelten Molekulargewicht (Mn) von 85 bis 20 000 und mindestens eine polare Gruppierung ausgewählt aus:
(a) Mono- oder Polyaminogruppen mit bis zu 6 Stickstoffatomen, wobei mindestens ein Stickstoffatom basische Eigenschaften hat;
(b) Nitrogruppen, ggf. in Kombination mit Hydroxylgruppen;
(c) Hydroxylgruppen in Kombination mit Mono- oder Polyaminogruppen, wobei mindestens ein Stickstoffatom basische Eigenschaften hat;
(d) Carboxylgruppen oder deren Alkalimetall- oder Erdalkalimetallsalzen;
(e) Sulfonsäuregruppen oder deren Alkalimetall- oder Erdalkalimetallsalzen;
(f) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(g) Carbonsäureestergruppen;
(h) aus Bernsteinsäureanhydrid abgeleiteten Gruppierungen mit Hydroxy- und/oder Amino- und/oder Amido- und/oder Imidogruppen; und/oder
(i) durch Mannich-Umsetzung von substituierten Phenolen mit Aldehyden und Mono- oder Polyaminen erzeugten Gruppierungen;

Der hydrophobe Kohlenwasserstoffrest in den obigen Detergensadditiven, welcher für die ausreichende Löslichkeit im Kraftstoff sorgt, hat ein zahlengemitteltes Molekulargewicht (Mn) von 85 bis 20,000, insbesondere von 113 bis 10,000, vor allem von 300 bis 5000. Als typischer hydrophober Kohlenwasserstoffrest, insbesondere in Verbindung mit den polaren Gruppierungen (a), (c), (h) und (i), kommen der Polypropenyl-, Polybutenyl- und Polyisobutenylrest mit jeweils Mn = 300 bis 5000, insbesondere 500 bis 2500, vor allem 700 bis 2300, in Betracht.

Als Beispiele für obige Gruppen von Detergensadditiven seien die folgenden genannt:
Mono- oder Polyaminogruppen (a) enthaltende Additive sind vorzugsweise Polyalkenmono- oder Polyalkenpolyamine auf Basis von Polypropen oder konventionellem (d.h. mit überwiegend mittenständigen Doppelbindungen) Polybuten oder Polyisobuten mit Mn = 300 bis 5000. Geht man bei der Herstellung der Additive von Polybuten oder Polyisobuten mit überwiegend mittenständigen Doppelbindungen (meist in der beta-und gamma-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z.B. Ammoniak, Monoamine oder Polyamine, wie Dimethylaminopropylamin, Ethylendiamin, Diethylentriamin, Triethylentetramin oder Tetraethylenpentamin, eingesetzt werden. Entsprechende Additive auf Basis von Polypropen sind insbesondere in der WO-A-94/24231 beschrieben.

Weitere bevorzugte Monoaminogruppen (a) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (a) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in DE-A-196 20 262 beschrieben sind.

Nitrogruppen (b), ggf. in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A-96/03367 und WO-A-96/03479 beschrieben sind. Diese Umsetzungsprodukte stellen in der Regel Mischungen aus reinen Nitropolyisobutenen (z.B. alpha,beta-Dinitropolyisobuten) und gemischten Hydroxynitropolyisobutenen (z.B. alpha-Nitro-beta-hydroxypolyisobuten) dar.

Hydroxylgruppen in Kombination mit Mono- oder Polyaminogruppen (c) enthaltende Additive sind insbesondere Umsetzungsprodukte von Polyisobutenepoxiden, erhältlich aus vorzugsweise überwiegend endständige Doppelbindungen aufweisendem Polyisobuten mit Mn = 300 bis 5000, mit Ammoniak, Mono- oder Polyaminen, wie sie insbesondere in EP-A-476 485 beschrieben sind.

Carboxylgruppen oder deren Alkalimetall- oder Erdalkalimetallsalze (d) enthaltende Additive sind vorzugsweise Copolymere von C₂-C₄₀-Olefinen mit Maleinsäureanhydrid mit einer Gesamt-Molmasse von 500 bis 20 000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A-307 815 bekannt. Derartige Additive dienen hauptsächlich zur Verhinderung von Ventilsitzverschleiß und können, wie in der WO-A-87/01126 beschrieben, mit Vorteil in Kombination mit üblichen Kraftstoffdetergenzien wie Poly(iso)butenaminen oder Polyetheraminen eingesetzt werden.

Sulfonsäuregruppen oder deren Alkalimetall- oder Erdalkalimetallsalze (e) enthaltende Additive sind vorzugsweise Alkalimetall- oder Erdalkalimetallsalze eines Sulfobernsteinsäurealkylesters, wie er insbesondere in der EP-A-639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂-C₄-alkylengruppierungen (f) enthaltende Additive sind vorzugsweise Polyether oder Polyetheramine, welche durch Umsetzung von C₂-C₆₀-Alkanolen, C₆-C₃₀-Alkandiolen, Mono- oder Di-C₂-C₃₀-alkylaminen, C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A-310 875, EP-A-356 725, EP-A-700 985 und US-A-4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (g) enthaltende Additive sind vorzugsweise Ester aus Mono-, Di- oder Tricarbonsäuren mit langkettigen Alkanolen oder Polyolen, insbesondere solche mit einer Mindestviskosität von 2 mm²/s bei 100°C, wie sie insbesondere in DE-A-38 38 918 beschrieben sind. Als Mono-, Di- oder Tricarbonsäuren können aliphatische oder aromatische Säuren eingesetzt werden, als Esteralkohole bzw.- polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder Imidogruppen (h) enthaltende Additive sind vorzugsweise entsprechende Derivate von Polyisobutenylbernsteinsäureanhydrid, welche durch Umsetzung von konventionellem oder hochreaktivem Polyisobuten mit Mn = 300 bis 5000 mit Maleinsäureanhydrid auf thermischen Wege oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Derartige Ottokraftstoffadditive sind insbesondere in US-A-4 849 572 beschrieben.

Durch Mannich-Umsetzung von substituierten Phenolen mit Aldehyden und Mono- oder Polyaminen erzeugte Gruppierungen (i) enthaltende Additive sind vorzugsweise Umsetzungsprodukte von polyisobutensubstituierten Phenolen mit Formaldehyd und Mono- oder Polyaminen wie Ethylendiamin, Diethylentriamin, Triethylentetramin, Tetraethylenpentamin oder Dimethylaminopropylamin. Die polyisobutenylsubstituierten Phenole können aus konventionellem oder hochreaktivem Polyisobuten mit Mn = 300 bis 5000 stammen. Derartige "Polyisobuten-Mannichbasen" sind insbesondere in der EP-A-831 141 beschrieben.

Trägeröle und weitere Komponenten:
Die erfindungsgemäßen Additiv-Formulierungen können darüber hinaus mit noch weiteren üblichen Komponenten und Additiven kombiniert werden. Hier sind in erster Linie Trägeröle ohne ausgeprägte Detergenswirkung zu nennen.

Geeignete mineralische Trägeröle sind bei der Erdölverarbeitung anfallende Fraktionen, wie Kerosin oder Naphtha, Brightstock oder Grundöle mit Viskositäten wie beispielsweise aus der Klasse SN 500 - 2000; aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500°C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für erfindungsgemäß verwendbare synthetische Trägeröle sind ausgewählt unter: Polyolefinen (Polyalphaolefine oder Polyinternalolefine), (Poly)estern, (Poly)alkoxylaten, Polyethern, aliphatischen Polyetheraminen, alkylphenolgestarteten Polyethern, alkylphenolgestarteten Polyetheraminen und Carbonsäureester langkettiger Alkanole.

Beispiele für geeignete Polyolefine sind Olefinpolymerisate mit Mn = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂-C₄-alkylengruppierungen enthaltende Verbindungen, welche durch Umsetzung von C₂-C₆₀-Alkanolen, C₆-C₃₀-Alkandiolen, Mono- oder Di-C₂-C₃₀-alkylaminen, C₁-C₃₀-Alkylcydohexanolen oder C₁-C₃₀-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EPA-310 875, EP-A-356 725, EP-A-700 985 und US-A-4,877,416 beschrieben. Beispielsweise können als Polyetheramine Poly-C₂-C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen , wie sie insbesondere in der DE-A-38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des Isooctanols, Isononanols, Isodecanols und des Isotridecanols, wie z.B. Di-(n- oder Iso-tridecyl)-phthalat.

Weitere geeignete Trägerölsysteme sind beispielsweise beschrieben in DE-A-38 26 608, DE-A-41 42 241, DE-A-43 09 074, EP-A-0 452 328 und EP-A-0 548 617.

Beispiele für besonders geeignete synthetische Trägeröle sind alkoholgestartete Polyether mit etwa 5 bis 35, wie z.B. etwa 5 bis 30, C₃-C₆-Alkylenoxideinheiten, wie z.B. ausgewählt unter Propylenoxid-, n-Butylenoxid- und i-Butylenoxid-Einheiten, oder Gemischen davon. Nichtlimitierende Beispiele für geeignete Starteralkohole sind langkettige Alkanole oder mit langkettigem Alkyl substituierte Phenole, wobei der langkettige Alkylrest insbesondere für einen geradkettigen oder verzweigten C₆-C₁₈-Alkylrest steht. Als bevorzugte Beispiele sind zu nennen Tridecanol und Nonylphenol.

Weitere geeignete synthetische Trägeröle sind alkoxylierte Alkylphenole, wie sie in der DE-A-10 102 913.6 beschrieben sind

Weitere übliche Additive sind Korrosionsinhibitoren, beispielsweise auf Basis von zur Filmbildung neigenden Ammoniumsalzen organischer Carbonsäuren oder von heterocyclischen Aromaten im Falle von Buntmetallkorrosionsschutz; Antioxidantien oder Stabilisatoren, beispielsweise auf Basis von Aminen wie p-Phenylendiamin, Dicyclohexylamin oder Derivaten hiervon oder von Phenolen wie 2,4-Di-tert.-butylphenol oder 3,5-Di-tert.-butyl-4-hydroxyphenylpropionsäure; Demulgatoren; Antistatikmittel; Metallocene wie Ferrocen; Methylcyclopentadienylmangantricarbonyl; Schmierfähigkeitsverbesserer (Lubricity-Additive) wie bestimmte Fettsäuren, Alkenylbernsteinsäureester, Bis(hydroxyalkyl)fettamine, Hydroxyacetamide oder Ricinusöl; sowie Farbstoffe (Marker). Gegebenenfalls werden auch Amine zur Absenkung des pH-Wertes des Kraftstoffes zugesetzt.

Die Komponenten bzw. Additive können dem Kraft- oder Schmierstoff einzeln oder als vorher zubereitetes Konzentrat (Additivpaket) zusammen mit dem erfindungsgemäßen Polyalkenamin-Formulierungen zugegeben werden.

Die genannten Detergensadditive mit den polaren Gruppierungen (a) bis (i) werden dem Kraftstoff üblicherweise in einer Menge von 10 bis 5000 Gew.-ppm, insbesondere 50 bis 1000 Gew.-ppm, zugegeben. Die sonstigen erwähnten Komponenten und Additive werden, wenn gewünscht, in hierfür üblichen Mengen zugesetzt.

### E) Kraft- und Schmierstoffe

Die erfindungsgemäßen Additivzusammensetzungen sind in allen herkömmlichen Ottokraftstoffen, wie sie beispielsweise in Ullmann's Encyclopedia of Industrial Chemistry, 5. Aufl. 1990, Band A16, S. 719 ff. beschrieben sind, verwendbar. Weiterhin sind sie zur Additivierung von Dieselkraftstoff, Kerosin und Jet-Treibstoff brauchbar.

Zum Beispiel ist die Verwendung in einem Ottokraftstoff mit einem Aromatengehalt von maximal 60, wie z.B. maximal 42 Vol.-% und einem Schwefelgehalt von maximal 2000, wie z.B. maximal 150 Gew.-ppm möglich.

Der Aromatengehalt des Ottokraftstoffes beträgt beispielsweise10 bis 50, wie z.B. 30 bis 42 Vol.-%, insbesondere 32 bis 40 Vol.-%. Der Schwefelgehalt des Ottokraftstoffes beträgt beispielsweise 2 bis 500, wie z.B. 5 bis 150 Gew.-ppm, oder 10 bis 100 Gew.- ppm.

Weiterhin kann der Ottokraftstoff beispielsweise einen Olefingehalt bis zu 50 Vol.-%, wie z.B. von 6 bis 21 Vol.-%, insbesondere 7 bis 18 Vol.-%; einen Benzolgehalt von bis zu 5 Vol.-%, wie z.B. 0,5 bis 1,0 Vol.-%, insbesondere 0,6 bis 0,9 Vol.-% und/oder einen Sauerstoffgehalt von bis zu 25 Gew.-%, wie z.B. bis zu 10 Gew.-% oder 1,0 bis 2,7 Gew.-%, insbesondere von 1,2 bis 2,0 Gew.-%, aufweisen.

Insbesondere können solche Ottokraftstoffe beispielhaft genannt werden, welche gleichzeitig einen Aromatengehalt von maximal 38 Vol.-%, einen Olefingehalt von maximal 21 Vol.-%, einen Schwefelgehalt von maximal 50 Gew.-ppm, eine Benzolgehalt von maximal 1,0 Vol.-% und eine Sauerstoffgehalt von 1,0 bis 2,7 Gew.-% aufweisen. Der Gehalt an Alkoholen und Ethern im Ottokraftstoff kann über einem weiten Bereich variieren. Beispiele typischer maximaler Gehalte sind für Methanol 15 Vol.-%, für Ethanol 65 Vol.-%, für Isopropanol 20 Vol.-%, für tert.-Butanol 15 Vol.-%, für Isobutanol 20 Vol.-% und für Ether mit 5 oder mehr C-Atomen im Molekül 30 Vol.-%.

Der Sommer-Dampfdruck des Ottokraftstoffes beträgt üblicherweise maximal 70 kPa, insbesondere 60 kPa (jeweils bei 37°C).

Die ROZ des Ottokraftstoffes beträgt in der Regel 75 bis 105. Ein üblicher Bereich für die entsprechende MOZ liegt bei 65 bis 95.

Die genannten Spezifikationen werden nach üblichen Methoden bestimmt (DIN EN 228).

Beispiele für erfindungsgemäß additivierbare Schmierstoffe umfassen Öle und Fette für Kraftfahrzeuge oder Antriebsaggregate, wie insbesondere Motorenöle, Getriebeöle und Turbinenöle üblicher Zusammensetzung und Spezifikation.

Die Erfindung wird nun anhand der folgenden Ausführungsbeispiele näher beschrieben:

### Experimenteller Teil:

### Herstellungsbeispiel 1: Herstellung einer Polyisobutenamin-Formulierung mit verbessertem Cloud Point. (Referenz Beispiel)

Polyisobutenamin (PIBA) hergestellt gemäß EP-A- 0 244 616 wird in dem dort in Beispiel 1 angegebenen Mischungsverhältnis von PIBA / Lösungsmittel (62,5 :37,5 Gew.-Teile) mit MIHAGOL M versetzt.

In gleicher Weise wurde eine Formulierung hergestellt, wobei jedoch ein Mischung von 66,7 Teilen PIBA und 33,3 Teilen MIHAGOL M verwendet wurde.

Cloud Point und Pour Point wurden für beide Formulierungen gemessen. Die Ergebnisse sind in folgender Tabelle A zusammengefasst:

**Tabelle A**

| | **Stand der Technik** | **Erfindung** |
|---|---|---|
| Cloud Point | -27,6°C | -29,4 °C |
| Pour Point | -27 °C | -27 °C |

Überraschenderweise konnte eine signifikante Verbesserung im Cloud Point erzielt werden.

**Herstellungsbeispiel 2:** Herstellung einer Polyisobutenamin-Formulierung mit verbesserten Tieftemperatureigenschaften.

500 g of Polyisobuten mit einem Molekulargewicht Mn von 1000, 269,2 g eines Lösungsmittels (aus 80 Gew.-% MIHAGOL M und 20 Gew.-% LIAV 230) sowie 2,8 g Cobaltoctacarbonyl werden 5 h bei 185 °C in einem 2,5 I Hubrührautoklaven unter Rühren bei 280 bar CO/H₂ 1:1 erhitzt. Anschließend wird das Gemisch auf Raumtemperatur abgekühlt, der Katalysator mit 400 ml 10%-iger wässriger Essigsäure entfernt und das Gemisch neutral gewaschen. Das resultierende Oxoprodukt wird mit 1 I Ammoniak, 300 g Ethanol und 100 g Raney-Cobalt in einem 5 l Rollautoklaven unter einem Wasserstoffdruck von 200 bar bei 180 °C 5 h behandelt. Nach Abkühlen des Gemischs wird der Katalysator abfiltriert, überschüssiger Ammoniak abgedampft und das Lösungsmittel abdestilliert.

Das verwendete Polyisobuten ist ein hochreaktives Polyisobuten gemäß DE-A-2,702,604 mit einem Anteil terminaler Doppelbindungen von mehr als 70 Mol-%.

Das auf diese Weise hergestellte verbesserte Polyisobutenamin ("PIBA neu", PIBA-Anteil 65 Gew.-%) wurde mit einer bekannten PIBA Formulierung ("PIBA alt"), hergestellt gemäß EP-A-0 244 616 (PIBA-Anteil 53 Gew.-%), hinsichtlich Pour Point und Lagerstabilität bei -10 bzw. -35 °C verglichen. Die Ergebnisse sind in folgender Tabelle B zusammengefasst.

**Tabelle B**

| | **PIBA alt** | **PIBA neu** |
|---|---|---|
| Pour Point | -30 °C | -33 °C |
| Lagerstabilität bei | | |
| -10 °C | klar, flüssig | klar, flüssig |
| -35 °C | kristalline Ausfällungen | klar, flüssig, kein Niederschlag |

Für das erfindungsgemäße Produkt konnte somit eine überraschend deutliche Verbesserung im Pour Point sowie in der Lagerstabilität erzielt werden.

### Herstellungsbeispiel 3: Herstellung einer Polyisobutenamin-Formulierung mit verbesserten Tieftemperatureigenschaften

Herstellungsbeispiel 1 wurde wiederholt, wobei jedoch als Lösungsmittel MIHAGOL M bzw. LIAV 230 in unterschiedlichen Mischungsverhältnissen eingesetzt wurden. Das Mischungsverhältnis Polyisobutenaminpolymer zu Lösungsmittel im Reaktionsendprodukt beträgt 66:34. Pour Point und Lagerstabilität des erhaltenen Produktes wurden für die verschiedenen Ansätze bestimmt. Die Ergebnisse sind in folgender Tabelle C zusammengefasst:

**Tabelle C**

| | | | | | |
|---|---|---|---|---|---|
| Verhältnis¹⁾ Mihagol : LIAV | 100:0 | 80 : 20 | 70 : 30 | 50 : 50 | 0 : 100 |
| Pour Point | -27 °C | -33 °C | -36 °C | -39 °C | -51°C |
| Lagerstabilität bei -35 °C | viel kristalline Ausfällungen | wenig kristalline Ausfällungen | klar, flüssig | klar, flüssig | klar, flüssig |

| | | | | | |
|---|---|---|---|---|---|
| ¹⁾ Gewichtsverhältnis | | | | | |

Die Ergebnisse zeigen, dass durch geeignete Variation des Lösungsmittels weitere überraschend signifikante Verbesserungen der Lagerstabilität ermöglicht werden.

## Patentansprüche

1. Polyalkenamin-Formulierung, umfassend wenigstens ein Polyalkenamin in einem Lösungsmittel, wobei die Formulierung wenigstens eine der folgenden Tieftemperatureigenschaften aufweist:
a) Cloud Point kleiner oder gleich -28°C (bestimmt nach DIN ISO 3015 oder DIN EN 23015)
b) Pour Point kleiner oder gleich -27°C (bestimmt nach DIN ISO 3016); und/oder
c) keine kristallinen Ausfällungen nach Lagerung über eine Dauer von 1 Tag bis 6 Wochen bei einer Temperatur von etwa - 35°C;
wobei das Lösungsmittel ausgewählt ist unter
L1) wenigstens einem n- oder iso-C₁₀-C₁₄-Paraffin, und
L2) wenigstens einem C₁₀-C₁₄-Naphthen, und
wobei L1 und L2 in einem Mischungsverhältnis von 10:90 bis 90:10 enthalten sind.

2. Formulierung nach Anspruch 1, mit einem Pour Point im Bereich von -27 bis -55°C und/oder einem Cloud Point im Bereich von -28 bis -51 °C.

3. Formulierung nach einem der vorhergehenden Ansprüche, wobei das Lösungsmittel eine Dichte (15°C, ASTM D 4052, EN ISO 12185-1996) im Bereich von 650 bis 900 kg/m³ und /oder eine Viskosität (20°C, ASTM D 445 ) im Bereich von 1,0 bis 5,0 mm²/s aufweist.

4. Formulierung nach einem der vorhergehenden Ansprüche, wobei der Polyalkenteil des Polyalkenamins das Polymerisationsprodukt von gleichen oder verschiedenen, geradkettigen oder verzweigten C₂-C₆-Olefin-Monomeren ist.

5. Formulierung nach Anspruch 4, wobei das Polyalken ein zahlenmittleres Molekulargewicht Mn von 200 bis 10.000 aufweist.

6. Formulierung nach Anspruch 5, wobei das Polyalken von i-Buten oder einem i-Buten-haltigen Monomerengemisch abgeleitet ist.

7. Formulierung nach Anspruch 6, wobei das Polyalken ein Polyisobuten (PIB) ist.

8. Formulierung nach einem der vorhergehenden Ansprüche, wobei das Polyalkenamin ein Polyisobutenamin (PIBA) ist, das von einem Polyisobuten mit wenigstens einer der folgenden Eigenschaften abgeleitet ist:
a) Anteil an Vinyliden-Doppelbindungen von mindestens 70 Mol.-%, bezogen auf Polyisobuten;
b) Polyisobutenpolymergerüst aus mindestens 85 Gew.-% Isobuteneinheiten;
c) Polydispersität im Bereich von 1,05 bis 7.

9. Formulierung nach einem der Ansprüche 1 bis 7, wobei das Polyalkenamin das Reaktionsprodukt eines Polyalkens mit einem Amin der folgenden allgemeinen Formel I ist
HNR¹R² (I)
worin
R¹ und R² unabhängig voneinander für H, einen C₁-C₁₈-Alkyl-,C₂-C₁₈-Alkenyl-, C₄-C₁₈-Cycloalkyl-, C₁-C₁₈-Alkyl-aryl-, Hydroxy-C₁-C₁₈-alkyl-, Poly(oxyalkyl)-, Polyalkylenpolyamin- oder einen Polyalkyleniminrest stehen; oder zusammen mit dem Stickstoffatom an das sie gebunden sind, für einen heterocyclischen Ring stehen.

10. Formulierung nach einem der Ansprüche 1 bis 7, wobei man als PIBA das Reaktionsprodukt der Hydroformylierung und anschließenden reduktiven Aminierung von reaktivem PIB verwendet.

11. Formulierung nach einem der vorhergehenden Ansprüche, wobei das Lösungsmittel das Prozesslösungsmittel der Hydroformylierung und anschließenden reduktiven Aminierung von reaktivem PIB ist.

12. PIBA-Formulierung, enthaltend PIBA in einem Gemisch, umfassend ein Lösungsmittel gemäß der Definition in einem der Ansprüche 1 bis 3, wobei PIBA in einem Anteil von wenigstens 63 Gew.-%, bezogen auf das Gesamtgewicht des Gemisches, enthalten ist.

13. Kraft- oder Schmierstoffzusammensetzung, umfassend in einer Hauptmenge eines Kraft- oder Schmierstoffs einen als Additiv wirksamen Anteil einer Formulierung nach einem der vorhergehenden Ansprüche.

14. Verwendung einer Formulierung nach einem der Ansprüche 1 bis 12
a) als Additiv für Kraft- oder Schmierstoffzusammensetzungen, oder
b) als Additiv für Drucktinten.

15. Verwendung nach Anspruch 14 als Additiv zur Verbesserung der Einlasssystem-reinigenden Wirkung eines Ottokraftstoffs.

16. Additivpaket, umfassend eine Formulierung nach einem der Ansprüche 1 bis 12, gegebenenfalls in Kombination mit wenigstens einem weiteren Co-Additiv.

17. Verwendung eines Lösungsmittelgemisches von L1 und L2 gemäß der Definition nach einem der Ansprüche 1 bis 3 zur Verbesserung des Tieftemperaturverhaltens von PIBA.

18. Verfahren zur Herstellung einer Polyalkenamin-Formulierung nach einem der Ansprüche 1 bis 12, wobei man
a) ein Polyalken gemäß der Definition in einem der Ansprüche 4 bis 8 in einem Lösungsmittel gemäß der Definition in einem der Ansprüche 1 bis 3 löst;
b) die Lösung in an sich bekannter Weise in Gegenwart von CO und H₂ hydroformyliert; und
c) das dabei erhaltenen Oxoprodukt in Gegenwart eines Amins gemäß obiger Formel 1 in Anspruch 9 hydrierend aminiert.

19. Verfahren nach Anspruch 18, wobei man in Stufe a) eine Lösung herstellt, deren Lösungsmittelanteil höchstens 40 Gew.-% bezogen auf das Gesamtgewicht der Lösung beträgt.

## Claims

1. A polyalkene amine formulation, comprising at least one polyalkene amine in a solvent, wherein the formulation has at least one of the following low temperature properties:
a) cloud point less than or equal to -28°C (determined to DIN ISO 3015 or DIN EN 23015)
b) pour point less than or equal to -27°C (determined to DIN ISO 3016); and/or
c) no crystalline precipitates after storage for a duration of 1 day to 6 weeks at a temperature of about -35°C;
wherein the solvent is selected from
1) at least one n- or iso-C₁₀-C₁₄ paraffin, and
S2) at least one C₁₀-C₁₄ naphthene, and
wherein S1 and S2 are present in a mixing ratio of from 10:90 to 90:10.

2. The formulation according to claim 1 having a pour point in the range from -27 to -55°C and/or a cloud point in the range from -28 to -51°C.

3. The formulation according to either of the preceding claims, wherein the solvent has a density (15°C, ASTM D 4052, EN ISO 12185-1996) in the range from 650 to 900 kg/m³ and/or a viscosity (20°C, ASTM D 445) in the range from 1.0 to 5.0 mm²/s.

4. The formulation according to any of the preceding claims, wherein the polyalkene moiety of the polyalkene amine is the polymerization product of identical or different, straight-chain or branched C₂-C₆ olefin monomers.

5. The formulation according to claim 4, wherein the polyalkene has a nianber-average molecular weight Mn of from 200 to 10 000.

6. The formulation according to claim 5, wherein the polyalkene is derived from isobutene or an isobutenic monomer mixture.

7. The formulation according to claim 6, wherein the polyalkene is a polyisobutene (PIB).

8. The formulation according to any of the preceding claims, wherein the polyalkene amine is a polyisobutene amine (PIBA) which is derived from a polyisobutene having at least one of the following properties:
a) fraction of vinylidene double bonds of at least 70 mol%, based on polyisobutene;
b) polyisobutene polymer structure composed of at least 85% by weight of isobutene units;
c) polydispersity in the range from 1.05 to 7.

9. The formulation according to any of claims 1 to 7, wherein the polyalkene amine is the reaction product of a polyalkene with an amine of the following general formula I
HNR¹R² (I)
where
R¹ and R² are each independently H, a C₁-C₁₈-alkyl, C₂-C₁₈-alkenyl, C₄-C₁₈-cycloalkyl, C₁-C₁₈-alkylaryl, hydroxy-C₁-C₁₈-alkyl, poly(oxyalkyl), polyalkylene polyamine or a polyalkylene imine radical; or, together with the nitrogen atom to which they are bonded, are a heterocyclic ring.

10. The formulation according to any of claims 1 to 7, wherein the PIBA used is the reaction product of the hydroformylation and subsequent reductive amination of reactive PIB.

11. The formulation according to any of the preceding claims, wherein the solvent is the process solvent of the hydroformylation and subsequent reductive amination of reactive PIB.

12. A PIBA formulation comprising PIBA in a mixture comprising a solvent as defined in any of claims 1 to 3, wherein PIBA is present in a fraction of at least 63% by weight, based on the total weight of the mixture.

13. A fuel or lubricant composition comprising, in a majority of a fuel or lubricant, an amount, effective as an additive, of a formulation according to any of the preceding claims.

14. The use of a formulation according to any of claims 1 to 12
a) as an additive for fuel or lubricant compositions, or
b) as an additive for printing inks.

15. The use according to claim 14 as an additive for improving the intake system-cleaning action of a gasoline fuel.

16. An additive package comprising a formulation according to any of claims 1 to 12, if appropriate in combination with at least one further coadditive.

17. The use of a solvent mixture of S1 and S2 as defined in any of claims 1 to 3 for improving the low temperature performance of PIBA.

18. A process for preparing a polyalkene amine formulation according to of claims 1 to 12, wherein
a) a polyalkene as defined in any of claims 4 to 8 is dissolved in a solvent as defined in any of claims 1 to 3;
b) the solution is hydroformylated in a manner known per se in the presence of CO and H₂; and
c) the resulting oxo product is aminated under hydrogenating conditions in the presence of an amine of the above formula I in claim 9.

19. The process according to claim 18, wherein a solution is prepared in stage a) whose solvent fraction is at most 40% by weight based on the total weight of the solution.

## Revendications

1. Composition de polyalcénamine, comprenant au moins une polyalcénamine dans un solvant, la composition présentant au moins l'une des propriétés à basse température suivantes :
a) un Cloud Point (point de trouble) inférieur ou à égal à -28 °C (déterminé selon DIN ISO 3015 ou DIN EN 23015)
b) un Pour Point (point d'écoulement) inférieur ou égal à -27 °C (déterminé selon DIN ISO 3016) ; et/ou
c) aucune précipitation en cristaux après stockage pendant une durée de 1 jour à 6 semaines à une température d'environ 35°C ;
le solvant étant choisi parmi
L1) au moins une n- ou isoparaffine en C₁₀-C₁₄, et
L2) au moins un naphtène en C₁₀-C₁₄, et
L1 et L2 étant contenus en un rapport de mélange de 10:90 à 90:10.

2. Composition selon la revendication 1, ayant un Pour Point dans la plage de -27 à -55 °C et/ou un Cloud Point dans la plage de -28 à -51 °C.

3. Composition selon l'une quelconque des revendications précédentes, dans laquelle le solvant présente une densité (à 15 °C, ASTM D 4052, EN ISO 12185-1996) dans la plage de 650 à 900 kg/m³ et/ou une viscosité (à 20 °C, ASTM D 445) dans la plage de 1,0 à 5,0 mm²/s).

4. Composition selon l'une quelconque des revendications précédentes, dans laquelle la fraction polyalcène de la polyalcénamine est le produit de polymérisation de monomères oléfiniques en C₂-C₆ identiques ou différente, à chaîne droite ou ramifiée.

5. Composition selon la revendication 4, dans laquelle le polyalcène présente une masse moléculaire moyenne en nombre Mn de 200 à 10 000.

6. Composition selon la revendication 5, dans laquelle le polyalcène est dérivé de l'isobutène ou d'un mélange de monomères contenant de l'isobutène.

7. Composition selon la revendication 6, dans laquelle le polyalcène est un polyisobutène (PIB).

8. Composition selon l'une quelconque des revendications précédentes, dans laquelle la polyalcénamine est une polyisobuténamine (PIBA), qui est dérivée d'un polyisobutène ayant su moins l'une des propriétés suivantes :
a) une teneur en doubles liaisons vinylidène d'au moins 70 % en moles, par rapport au polyisobutène ;
b) un squelette polymère polyisobutène constitué d'au moins 85 % en poids de motifs isobutène ;
c) une polydispersité dans la plage de 1,05 à 7.

9. Composition selon l'une quelconque des revendications 1 à 7, dans 5 laquelle la polyalcénamine est le produit de réaction d'un polyalcène avec une amine de formule générale I suivante
HNR¹R² (I)
dans laquelle
R¹ et R² représentent, indépendamment l'un de l'autre, H, un radical alkyle en C₁-C₁₈, alcényle en C₂-C₁₈, cycloalkyle en C₄-C₁₈, alkyl(C₁-C₁₈)-aryle, hydroxyalkyle(C₁-C₁₈), poly(oxyalkyle), polyalkylènepolyamine ou un radical polyalkylène-imine, ou forment ensemble, avec l'atome d'azote auquel ils sont liés, un cycle hétérocyclique.

10. Composition selon l'une quelconque des revendications 1 à 7, dans laquelle on utilise en tant que PTBA le produit de réaction de l'hydroformylation et de l'amination réductrice subséquente de PIB réactif.

11. Composition selon l'une quelconque des revendications précédentes, dans laquelle le solvant est le solvant de processus de l'hydroformylation et de l'amination réductrice subséquente de PIB réactif.

12. Composition de PIBA, contenant de la PIBA en un mélange comprenant un solvant selon la définition dans l'une quelconque des revendications 1 à 3, la PIBA étant contenue en une proportion d'au moins 63 % en poids, par rapport au poids total du mélange.

13. Composition de carburant ou de lubrifiant, comprenant dans une quantité principale d'un carburant ou lubrifiant une quantité, efficace en tant qu'additif, d'une composition selon l'une quelconque des revendications précédentes.

14. Utilisation d'une composition selon l'une quelconque des revendications 1 à 12
a) comme additif pour des compositions de carburant ou de lubrifiant ou
b) comme additif pour des encres d'impression.

15. Utilisation selon la revendication 14, comme additif pour l'amélioration de l'action de nettoyage du système d'admission d'un carburant pour moteur à explosion.

16. Formule d'additif, comprenant une composition selon l'une quelconque des revendications 1 à 12, éventuellement en association avec au moins un autre

17. Utilisation d'un mélange de solvants de L1 et L2 conformément à la définition selon l'une quelconque des revendications 1 à 3, pour l'amélioration du comportement a basse température de PIBA.

18. Procédé pour la préparation d'une composition de polyalcénamine selon l'une quelconque des revendications 1 à 12, dans lequel
a) on dissout un polyalcène selon la définition dans l'une quelconque des revendications 4 à 8 dans un solvant selon la définition dans l'une quelconque des revendications 1 à 3 ;
b) on soumet la solution, à une hydroformylation d'une façon connue en soi, en présence de CO et H₂ ; et
c) on soumet le produit oxo ainsi obtenu à une amination hydrogénante en présence d'une amine selon la formule I ci-dessus dans revendication 9.

19. Procédé selon la revendication 18, dans lequel on prépare dans l'étape a) une solution dent la teneur en solvant est d'au maximum 40 % en poids, par rapport au poids total de la solution.
